# EUROPÄISCHE PATENTSCHRIFT

(11) **EP 3 199 828 B1**
(45) Veröffentlichungstag und Bekanntmachung des Hinweises auf die Patenterteilung: **25.08.2021**
(21) Anmeldenummer: 17150154.7
(22) Anmeldetag: 03.01.2017
(51) Int. Cl.: F16D 65/097

(54) **BREMSBELAGHALTERUNG EINER FAHRZEUG-SCHEIBENBREMSE SOWIE NIEDERHALTER FÜR DIE BEFESTIGUNG VON BREMSBELÄGEN**
BRAKE PAD HOLDER OF A VEHICLE DISC BRAKE AND HOLDER FOR THE FIXING OF BRAKE PADS
FIXATION DE GARNITURE DE FREIN À DISQUE DE VÉHICULE ET SERRE-FLAN POUR LA FIXATION DES GARNITURES DE FREIN

(30) Priorität: 15.01.2016 DE 102016100623
(43) Veröffentlichungstag der Anmeldung: 02.08.2017
(73) Patentinhaber: BPW Bergische Achsen KG, 51674 Wiehl (DE)
(72) Erfinder: Dowe, Günter, 51588 Nümbrecht (DE)
(74) Vertreter: Christophersen & Partner Partnerschaft mbB Patentanwälte

(56) Entgegenhaltungen:
- DE-A1-102007 041 658
- DE-A1-102008 027 052
- DE-A1-102009 030 414
- DE-A1-102010 043 898
- DE-A1-102013 008 161

## Beschreibung

Die Erfindung betrifft eine Bremsbelaghalterung einer Fahrzeug-Scheibenbremse gemäß dem Oberbegriff des Patentanspruchs 1 sowie einen Niederhalter für die Befestigung von Bremsbelägen in einer Scheibenbremse gemäß dem Oberbegriff des Patentanspruchs 10.

Aus der DE 10 2005 044 091 A1 und der DE 10 2013 100 162 A1 sind Scheibenbremsen mit einem Bremssattel bekannt, der eine Bremsscheibe und zu deren beiden Seiten angeordnete Bremsbeläge übergreift. Ein langgestreckter Niederhalter in Gestalt eines starren Bügels erstreckt sich quer über die Bremsbeläge und beaufschlagt die Bremsbeläge mit einer Federkraft. Das eine Ende des Niederhalters ist unmittelbar in einer Öffnung des Bremssattels fixiert, wohingegen der andere Endbereich des Niederhalters mittels eines Bolzens an dem Bremssattel fixiert ist. Zur Verbindung mit dem Bolzen ist der Niederhalter in diesem Endbereich mit einer Befestigungsöffnung versehen, die sich radial in Bezug auf die Bremsscheibe erstreckt.

Dokument DE 10 2008 027 052 A1 offenbart eine Bremshalterung mit einem Niederhalter, der an seinen zwei Enden jeweils eine Befestigungsöffnung aufweist.

Der Erfindung liegt die Aufgabe zugrunde, eine Bremsbelaghalterung einer Scheibenbremse so weiterzuentwickeln, dass die hierfür erforderlichen Teile kostengünstig herstellbar sind und die Montage sowie die Demontage der Bremsbeläge einfach vonstattengehen kann. Des Weiteren soll ein für eine solche Bremsbelaghalterung geeigneter Niederhalter geschaffen werden.

Zur Lösung dieser Aufgabe wird eine Bremsbelaghalterung einer Fahrzeug-Scheibenbremse nach Anspruch 1, und ein Niederhalter für die Befestigung von Bremsbelägen in einer Scheibenbremse nach Anspruch 10 vorgeschlagen.

Bei den vorgeschlagenen Lösungen ist der Niederhalter fahrzeugaußenseitig mit einer vollständig oder nahezu vollständig geschlossenen Befestigungsöffnung versehen, deren Mittelachse sich in Richtung der Breite des Niederhalters und damit in Bremsscheiben-Umfangsrichtung erstreckt. Durch diese Befestigungsöffnung ist ein Bolzen hindurchsteckbar, der den Niederhalter mit dem

Bremssattel verbindet, wobei sich auch der Bolzen in Richtung der Breite des Niederhalters und damit in Bremsscheiben-Umfangsrichtung erstreckt.

Zur Aufnahme des Bolzens weist die Befestigungsöffnung, die ein- oder zweiteilig ausgebildet sein kann, vorzugsweise einen runden Öffnungsquerschnitt auf.

Scheibenbremsen werden, für eine platzsparende Anordnung, zumeist möglichst weit fahrzeugaußen angeordnet. Dies führt dazu, dass sich Teile der Scheibenbremse bereits innerhalb des gebremsten Fahrzeugrades befinden. Zugleich ist angestrebt, für eine hohe Bremsleistung die Bremsscheibe der Scheibenbremse möglichst groß zu dimensionieren. Dieses Bestreben hat allerdings zur Folge, dass zwischen den Bauteilen der Scheibenbremse und dem um die Bremse rotierenden Fahrzeugrad nur wenig Freiraum verbleibt. Nicht ungewöhnlich ist daher, dass es beim Auftreten zusätzlicher Biegebelastungen zu einem Schleifen radial weit außen liegender Bremsenteile an der rotierenden Innenfläche des Fahrzeugrades kommt.

Daher wird mit einer erfindungsgemäßen Ausgestaltung des Niederhalters vorgeschlagen, dass dessen Oberseite entlang der Niederhalter-Längsmittellinie als eine langgestreckte Basis ausgebildet ist, und dass sich die Mittelachse der Befestigungsöffnung unterhalb dieser Basis befindet. Denn dies hat den Vorteil, dass in diesem Bereich Scheibenbremsteile, nämlich der entsprechende Endbereich des Niederhalters, radial weniger weit nach außen ragen und damit ein Beitrag geleistet wird, die bauliche Enge zu dem umgebenden, um die Bremse rotierenden Fahrzeugrad zu entschärfen.

Die Befestigungsöffnung wird gemäß einer ersten erfindungsgemäßen Variante durch eine Öse gebildet, die aus einem um mindestens 300° verformten Materialabschnitt des Niederhalters besteht. Falls der Niederhalter aus Metallblech besteht, besteht die Öse vorzugsweise aus einem um nahezu 360° verformten Materialabschnitt des Metallblechs, wobei der insoweit noch verbleibende Restspalt metallisch verschlossen ist, vorzugsweise durch einen Schweiß- oder Lötpunkt.

Erfindungsgemäß wird eine zweigeteilte Ausgestaltung der Befestigungsöffnung vorgeschlagen, bestehend aus einer ersten Befestigungsöffnung z. B. in Gestalt einer Öse, einer zu der ersten Befestigungsöffnung fluchtenden, zweiten Befestigungsöffnung z. B. in Gestalt einer Öse, und einem dazwischen angeordneten Freiraum, in den ein an dem Bremssattel angeformter Halter ragt. Vorzugsweise sind in diesem Fall beide Befestigungsöffnungen durch jeweils eine Öse gebildet.

Gemäß einer zweiten erfindungsgemäßen Variante wird die Befestigungsöffnung durch ein Rohr gebildet, das Bestandteil des Niederhalters ist und dessen Rohrachse sich in Bremsscheiben-Umfangsrichtung erstreckt.

Gemäß einer Ausgestaltung des Niederhalters ist dieser auf einem großen Teil seiner Gesamtlänge als eine Rille aus einer langgestreckten Basis und an den Seiten der Basis angeordneten Seitenflanken ausgebildet. Nur die Basis ist mit dem Rohr verbunden, wohingegen die Seitenflanken mit Abstand zu dem Rohr enden. Vorzugsweise ist das Rohr stoffschlüssig an der Basis befestigt, z. B. durch Verschweißen mit der Basis.

Erfindungsgemäß weist das Rohr eine Rohrlänge auf, die größer ist als die Breite des Niederhalters auf dessen übriger Längserstreckung.

Ausführungsbeispiele werden im Folgenden anhand der Zeichnungen näher erläutert. Darin zeigen:
- Fig. 1: eine perspektivische Darstellung des Bremssattels einer Fahrzeug-Scheibenbremse einschließlich des im Bremssattel ausgebildeten Belagschachts mit darin angeordneten Bremsbelägen, sowie einer Niederhalteranordnung über dem Belagschacht;
- Fig. 2: die Gegenstände nach Fig. 1 in einem mittig angelegten Längsschnitt durch den Sattel;
- Fig. 3: eine perspektivische Darstellung nur des an dem Bremssattel befestigbaren Niederhalters der Niederhalteranordnung;
- Fig. 4: eine Seitenansicht des Niederhalters nach Fig. 7;
- Fig. 5: in einer zweiten Ausführungsform eine perspektivische Darstellung des Bremssattels einer Fahrzeug-Scheibenbremse einschließlich des im Bremssattel ausgebildeten Belagschachts mit darin angeordneten Bremsbelägen, sowie einer Niederhalteranordnung über dem Belagschacht;
- Fig. 6: die Gegenstände nach Fig. 5 in einem mittig angelegten Längsschnitt durch den Sattel;
- Fig. 7: eine perspektivische Darstellung nur des an dem Bremssattel befestigbaren Niederhalters der Niederhalteranordnung;
- Fig. 8: in perspektivischer Darstellung eine dritte Ausführungsform des Niederhalters.

Die Zeichnungen zeigen den Bremssattel 1 einer Fahrzeug-Scheibenbremse für Nutzfahrzeuge. Die Scheibenbremse kann vom Gleitsattel- oder vom Festsattel-Bautyp sein. Zu jeder Seite der nur anhand ihrer Drehachse A wiedergegebenen Bremsscheibe der Scheibenbremse ist je ein Bremsbelag 3 angeordnet. Zur Aufnahme der Bremsbeläge 3 ist der Bremssattel mit einem Belagschacht 6 versehen, über den sich ein bügelförmiger Belagniederhalter 7 erstreckt. Dieser überbrückt den Belagschacht 6 in der Weise, dass sich der Belagniederhalter 7 quer über beide Bremsbeläge 3 erstreckt.

Jeder Bremsbelag 3 besteht wie üblich aus dem eigentlichen Reibbelag 4 sowie einer Rückenplatte 5. Die Rückenplatte 5 dient der besseren Verteilung des Bremsdrucks über die Belagfläche. Außerdem übernimmt sie die Führung und die Abstützung des Bremsbelags entweder an dem Bremssattel 1 selbst, oder an einem achsfesten Bremsträger der Scheibenbremse.

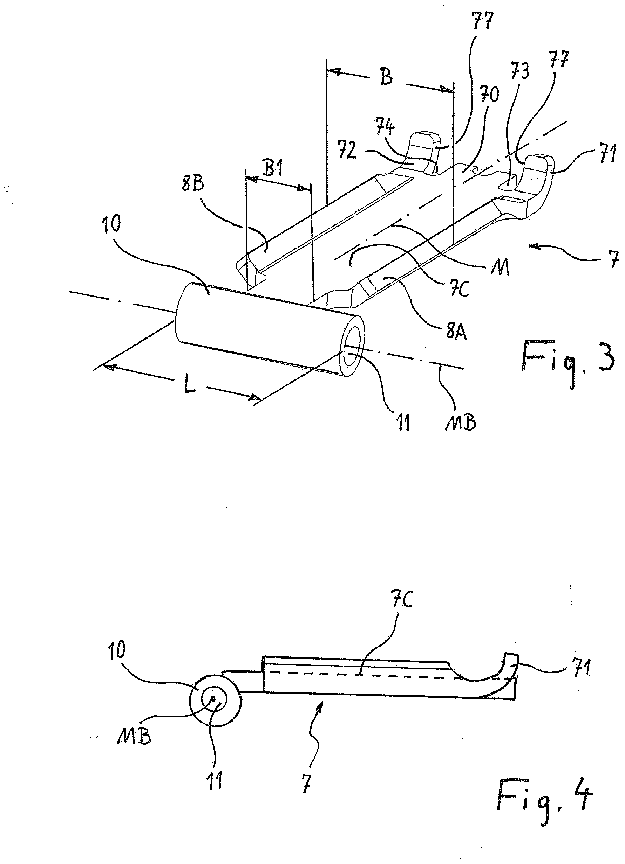

Der in Fig. 3 und Fig. 4 als Einzelteil wiedergegebene Belagniederhalter 7 ist länglich gestaltet, wobei sich seine Längsmittellinie M parallel zu der Drehachse A der Bremsscheibe erstreckt. Seine Länge in Richtung der Drehachse A ist deutlich größer, als seine in Bremsscheiben-Umfangsrichtung sich erstreckende Breite B.

Das rechts wiedergegebene, fahrzeuginneres Ende des Niederhalters 7 ist unmittelbar an dem Bremssattel 1 befestigt, wozu dieses Ende in einer schlitzförmigen Ausnehmung 14 des Bremssattels 1 sitzt. Das links wiedergegebene, fahrzeugäußere Ende des Niederhalters 7 ist unter Verwendung eines Bolzens 13 mittelbar an dem Bremssattel 1 befestigt, was noch näher erläutert werden wird.

Zur Sicherung der beiden Bremsbeläge 13 in dem Belagschacht 6 ist der Niederhalter 7 als ein starrer Haltebügel ausgebildet, der sich quer über den Belagschacht 6 erstreckt.

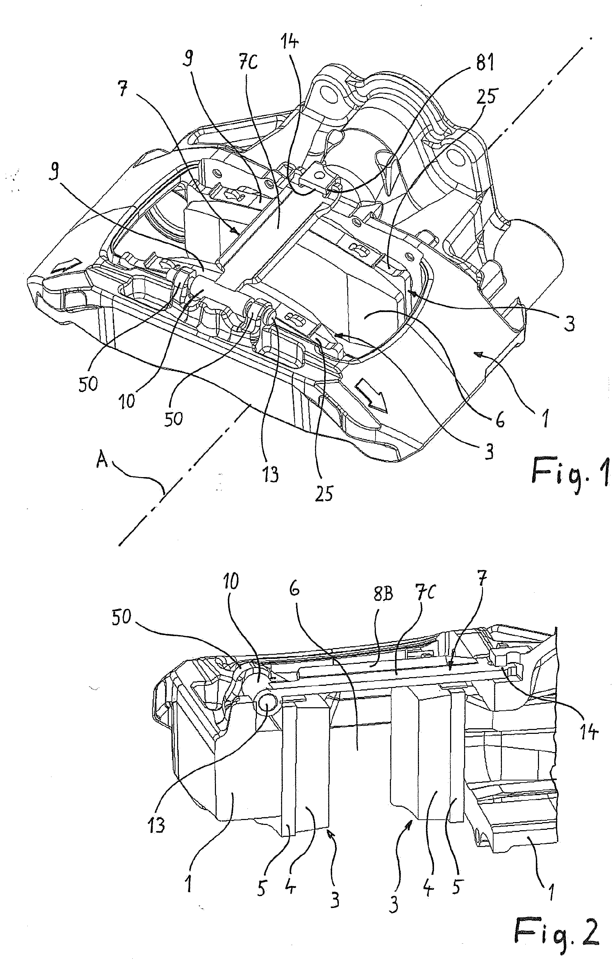

Der Niederhalter 7 ist gemäß Fig. 1 mit zwei biegeelastischen Niederhaltefedern 9 kombiniert. Aufgabe der so gestalteten Niederhalteranordnung ist es, beide Bremsbeläge so gegenüber dem Belagschacht 6 zu fixieren, dass die Bremsbeläge nicht nach radial außen, bezogen auf die Drehachse A der Bremsscheibe, aus dem Belagschacht 6 heraustreten oder herausfallen können.

Der starre Niederhalter 7 ist auf dem überwiegenden Teil seiner Gesamtlänge von rinnenförmigem Querschnitt mit einer auf der Längsmittellinie M angeordneten Basis 7C, an die sich längs beider Längsränder der Basis 7C Seitenflanken 8A, 8B anschließen, wodurch dieser zentrale Längsabschnitt des Niederhalters gegenüber Biegekräften verstärkt ist. Die Flanken 8A, 8B weisen die Gestalt ansteigender Schrägen auf. Dadurch weist der Niederhalter 7 auf diesem größten Teil seiner Länge einen in etwa trapezförmigen Querschnitt und insbesondere den Querschnitt einer trapezförmigen Rinne auf. Der Winkel, unter dem die Seitenflanken 8A, 8B zu dem flachen Boden der Rinne angeordnet sind, beträgt zwischen 15° und 90°, beim Ausführungsbeispiel etwa 20°.

Jede der beiden aus Federstahl bestehenden Niederhaltefedern 9 erstreckt sich parallel zu der jeweiligen Rückenplatte 5. Jede Niederhaltefeder 9 ist in ihrer Mitte von unten gegen den Niederhalter 7 abgestützt, während sie mit ihren Enden auf dem oberen Rand 25 der jeweiligen Rückenplatte 5 abgestützt ist. Auf diese Weise übt der Niederhalter 7 mittels der Niederhaltefedern 9 eine Federkraft auf die Bremsbeläge 3 aus, welche die Bremsbeläge 3 zu der Drehachse A hin beaufschlagt.

Nahe seines einen Endes ist der Niederhalter 7 mit einer Breite B1 schmaler gestaltet, als auf seinem die Gestalt einer Rinne aufweisenden Längsabschnitt, auf dem der Niederhalter die Breite B aufweist. Der Längsabschnitt mit der geringeren Breite B1 ist in Verlängerung der langgestreckten Basis 7C angeordnet. An diesem Längsabschnitt ist quer zur Längsmittellinie M ein Rohr 10 befestigt, welches sich in Richtung der Breite B des Niederhalters erstreckt. Die Rohrachse des Rohrs 10 erstreckt sich daher in Bremsscheiben-Umfangsrichtung. Hingegen enden die Seitenflanken 8A, 8B vorzugsweise mit Abstand zu dem Rohr 10.

Der zylindrische Öffnungsquerschnitt des Rohrs 10 bildet eine in Richtung der Breite B durchgehende Befestigungsöffnung 11. Diese nimmt den zylindrischen Bolzen 13 auf, welcher den Niederhalter 7 mit dem Bremssattel 1 verbindet. Die Mittelachse MB der Befestigungsöffnung 11 liegt tiefer, nämlich unterhalb der Ebene der Basis 7C.

Vorzugsweise ist das Rohr 10 durch Verschweißen mit der Basis 7C des Niederhalters 7 verbunden. Die Wandstärke des Rohrs 10 ist geringer als die Wandstärke des Stahlblechs, aus dem der Niederhalter 7 durch Stanzen und Umformen hergestellt ist. Alternativ kann der Niederhalter auch als Gussteil produziert sein.

Für die sattelseitige Festlegung des Bolzens 13 sind an dem Bremssattel 1 zwei Halter 50 angeordnet. Als Halter 50 dienen hier zwei an dem Bremssattel 1 einstückig angeformte Lagerböcke. Diese weisen jeweils eine Bohrung auf, durch die der Bolzen 13 hindurchführt. Damit sich der Bolzen 13 nicht in Bolzenlängsrichtung aus den Haltern 50 und damit aus dem Sattel lösen kann, sind an dem Bolzen 13 geeignete Sicherungsringe, Splinte oder dergleichen Maßnahmen vorgesehen.

Der Bolzen 13 durchdringt sowohl die beiden zueinander fluchtenden Öffnungen in den Lagerböcken 50, als auch auf der Mittelachse MB die Befestigungsöffnung 11 in dem Rohr 10. Dabei befindet sich das Rohr 10, welches die Länge L aufweist, zwischen den zwei Lagerböcken 50 und liegt mit seiner einen Stirnseite an dem einen Lagerbock 50, und mit seiner anderen Stirnfläche an dem anderen Lagerbock 50 spielfrei oder mit wenig Spiel an.

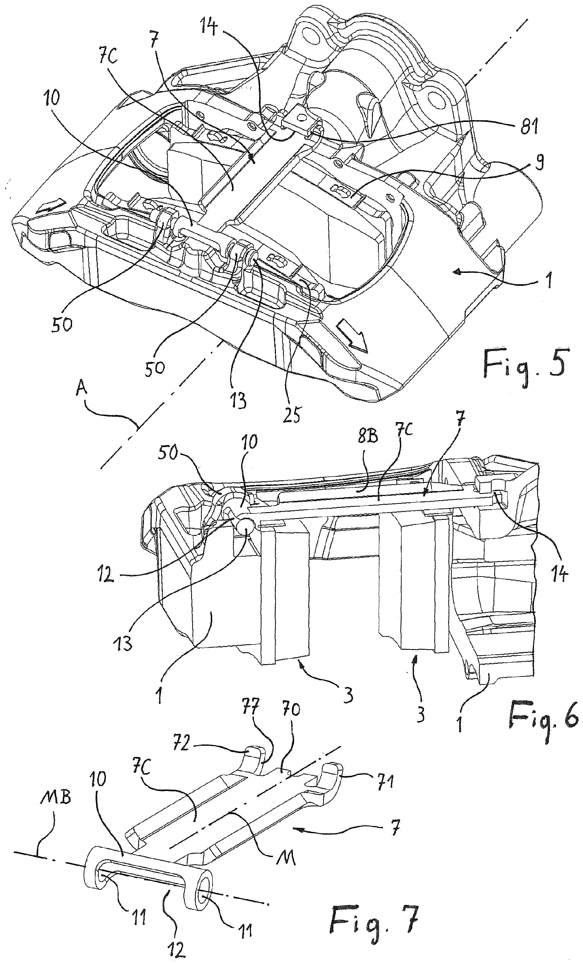

Die Figuren 5 - 7 zeigen eine alternative Ausführungsform, bei der das Rohr 10 nicht auf seiner ganzen Länge und über seinen ganzen Umfang als geschlossenes Rohr ausgebildet ist, sondern beschränkt auf einen Mittelabschnitt mit einer seitlichen Öffnung 12 versehen ist. Auf diese Weise lässt sich der Gewichtsanteil des Rohrs 10 an dem Niederhalter 7, und damit auch das Gewicht des Niederhalters 7 verringern. Zudem kann die Öffnung 12 hilfreich sein, Platz gegenüber unmittelbar benachbarten Flächen oder Konturen des Sattels 1 zu schaffen.

In seinem anderen, fahrzeuginnen gelegenen Endbereich ist der Niederhalter 7 in der Weise gestaltet, dass sich eine Abstützung dieses Niederhalterendes gegen den Bremssattel 1 in Umfangsrichtung ergibt. Hierzu ist der Niederhalter 7 an diesem Ende mit einem auf seiner Längsmittellinie M sich erstreckenden und die Basis 7C fortsetzenden Mittelabschnitt 70, sowie mit jeweils einem Seitenabschnitt 71 bzw. 72 zu jeder Seite des Mittelabschnitts 70 versehen. Die Seitenabschnitte 71, 72 befinden sich in Verlängerung der Seitenflanken 8A, 8B des als Rinne gestalteten Niederhalterabschnitts und weisen, in Längsrichtung des Niederhalters betrachtet, zu ihren Enden hin einen nach oben gebogenen, hakenförmigen Verlauf auf. Dadurch kommt es an jedem Seitenabschnitt 71, 72 zur Bildung einer oberhalb der Ebene der Basis 7C angeordneten Innenfläche 77.

Zwecks Abstützung gegen am Bremssattel 1 ausgebildete Gegenflächen 81 sind die beiden Innenflächen 77 so einander zugewandt, dass sich zwischen ihnen ein Freiraum befindet. Die Abstützung an den Gegenflächen 81 kann spielfrei erfolgen, oder mit einem in Umfangsrichtung der Bremsscheibe begrenzten Seitenspiel.

Um die gebogenen Seitenabschnitte 71, 72 durch Umformen der Stahlblechplatte, aus der der Niederhalter 7 besteht, herzustellen, sind die Seitenabschnitte 71, 72 jeweils durch einen Längsschnitt 73, 74, welcher nur zu dem betreffenden Ende des Niederhalters offen ist, von dem Mittelabschnitt 70 getrennt. Nur der Mittelabschnitt 70 ragt in den Schlitz 14 des Bremssattels 1, hingegen befinden sich die Seitenabschnitte 71, 72 außerhalb des Schlitzes. Damit sich die Innenflächen 77 in Richtung der Breite B an dem Bremssattel 1 abstützen können, ist der Sattel 1 oberhalb des Schlitzes 14 mit entsprechenden, einander abgewandten Gegenflächen 81 versehen.

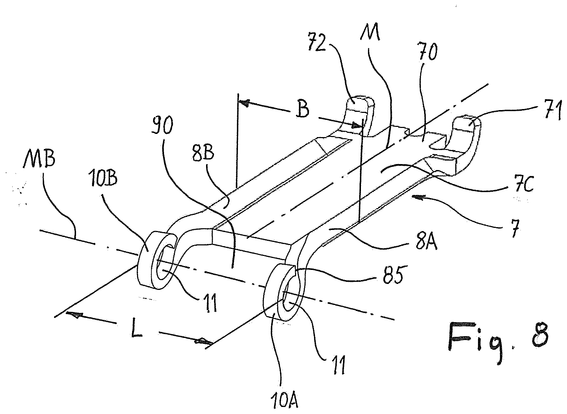

Die Fig. 8 zeigt eine dritte Variante des Niederhalters. Anstelle eines Rohrs oder Röhrchens wird die Befestigungsöffnung 11 durch insgesamt zwei Ösen 10A, 10B gebildet, wobei jede der beiden Ösen aus einem um nahezu 360° verformten Materialabschnitt des Niederhalters 7 besteht.

Der infolge dieser Verformung noch verbleibende Restspalt 85 kann zwecks Verstärkung der Öse 10A, 10B metallisch verschlossen sein, vorzugsweise durch einen im Bereich des Spalts 85 gesetzten Schweiß- oder Lötpunkt.

Es ergibt sich in diesem Fall daher eine zweigeteilte Ausgestaltung der Befestigungsöffnung 11 bestehend aus einer ersten Befestigungsöffnung 11 in der ersten Öse 10A, einer zu der ersten Befestigungsöffnung fluchtenden, zweiten Befestigungsöffnung 11 in der zweiten Öse 10B, und einem zwischen den Ösen angeordneten Freiraum 90. In diesen Freiraum 90 ragt der an dem Bremssattel 1 angeformte, als Halter dienende Lagerbock. Dieser Lagerbock kann vergleichbar den Lagerböcken 50 gemäß den Figuren 1, 2, 5 und 6 sein, jedoch ist er nur einmal vorhanden und zentral in Verlängerung der Längsmittellinie M des Niederhalters 7 angeordnet. Er kann in den Freiraum 90 ragen, muss allerdings dem Bolzen 13 genügend Platz für dessen Montage lassen.

Die Länge L, gemessen zwischen den einander abgewandten Stirnflächen der beiden Ösen 10A, 10B ist größer als die Breite B des Niederhalters 7 auf dessen übriger Längserstrecku ng.

### Bezugszeichenliste

- 1: Bremssattel
- 3: Bremsbelag
- 4: Reibbelag
- 5: Rückenplatte
- 6: Belagschacht
- 7: Niederhalter
- 7C: Basis
- 8A: Seitenflanke
- 8B: Seitenflanke
- 9: Niederhaltefeder
- 10: Rohr
- 10A: Öse
- 10B: Öse
- 11: Befestigungsöffnung
- 12: Öffnung
- 13: Bolzen
- 14: Schlitz, Ausnehmung
- 25: Rand
- 50: Halter, Lagerbock
- 70: Mittelabschnitt
- 71: Seitenabschnitt
- 72: Seitenabschnitt
- 73: Längsschlitz
- 74: Längsschlitz
- 77: Innenfläche
- 81: Gegenfläche am Bremssattel
- 85: Spalt
- 90: Freiraum

- A: Drehachse der Bremsscheibe
- B: Breite
- B1: Breite
- L: Rohrlänge
- M: Längsmittellinie
- MB: Mittelachse Befestigungsöffnung

## Patentansprüche

1. Bremsbelaghalterung einer Fahrzeug-Scheibenbremse mit zu beiden Seiten einer Bremsscheibe in einem Belagschacht (6) eines Bremssattels (1) angeordneten fahrzeuginneren und fahrzeugäußeren Bremsbelägen (3), sowie mit einem quer über die Bremsbeläge (3) führenden Niederhalter (7), der zu der Scheibenbremsachse (A) hin mittelbar oder unmittelbar gegen die Bremsbeläge (3) abgestützt ist und an seinen zwei Enden jeweils einen Endbereich aufweist, mit dem der Niederhalter (7) gegenüber dem Bremssattel (1) abgestützt ist, wobei der Niederhalter (7) in einem der Endbereiche mit einer vollständig oder nahezu vollständig geschlossenen Befestigungsöffnung (11) versehen ist, deren Mittelachse (MB) sich in Bremsscheiben-Umfangsrichtung erstreckt, **dadurch gekennzeichnet, dass** sich die Befestigungsöffnung (11) fahrzeugaußenseitig befindet, dass die Oberseite des Niederhalters entlang der Niederhalter-Längsmittellinie (M) als eine langgestreckte Basis (7C) ausgebildet ist, und dass sich die Mittelachse (MB) der Befestigungsöffnung (11) unterhalb der Basis (7C) befindet.

2. Bremsbelaghalterung nach Anspruch 1, **dadurch gekennzeichnet, dass** die Befestigungsöffnung (11) von rundem Öffnungsquerschnitt ist und einen Bolzen (13) umgibt, der den Niederhalter (7) mit dem Bremssattel (1) verbindet.

3. Bremsbelaghalterung nach Anspruch 1 oder 2, **dadurch gekennzeichnet, dass** die Befestigungsöffnung durch eine Öse (10A, 10B) gebildet wird, die aus einem um mindestens 300° verformten Materialabschnitt des Niederhalters (7) besteht.

4. Bremsbelaghalterung nach Anspruch 3, **dadurch gekennzeichnet, dass** der Niederhalter (7) aus einem starren Metallblech und die Öse (10A, 10B) aus einem um nahezu 360° verformten Materialabschnitt des Metallblechs besteht, wobei der insoweit verbleibende Restspalt (85) metallisch verschlossen ist, vorzugsweise durch einen Schweiß- oder Lötpunkt.

5. Bremsbelaghalterung nach einem der vorangehenden Ansprüche, **gekennzeichnet durch** eine zweigeteilte Ausgestaltung der Befestigungsöffnung (11) bestehend aus einer ersten Befestigungsöffnung in Gestalt einer Öse (10A), einer zu der ersten Befestigungsöffnung fluchtenden, zweiten Befestigungsöffnung in Gestalt einer Öse (10B) und einem zwischen den Ösen (10A, 10B) angeordneten Freiraum (90), in den ein an dem Bremssattel (1) angeformter Halter (50) ragt.

6. Bremsbelaghalterung nach Anspruch 1 oder 2, **dadurch gekennzeichnet, dass** die Befestigungsöffnung (11) durch ein Rohr (10) gebildet wird, dessen Rohrachse sich in Bremsscheiben-Umfangsrichtung erstreckt.

7. Bremsbelaghalterung nach Anspruch 6, **dadurch gekennzeichnet, dass** der Niederhalter (7) auf einem großen Teil seiner Gesamtlänge als eine Rinne aus einer langgestreckten Basis (7C) und an den Seiten der Basis (7C) angeordneten Seitenflanken (8A, 8B) ausgebildet ist, wobei nur die Basis (7C) mit dem Rohr (10) verbunden ist, hingegen die Seitenflanken (8A, 8B) mit Abstand zu dem Rohr (10) enden.

8. Bremsbelaghalterung nach Anspruch 7, **dadurch gekennzeichnet, dass** das Rohr (10) stoffschlüssig mit der Basis (7C) verbunden ist.

9. Bremsbelaghalterung nach einem der Ansprüche 6 - 8, **dadurch gekennzeichnet, dass** das Rohr (10) eine Rohrlänge (L) aufweist, die größer ist als die Breite (B) des Niederhalters (7) auf dessen übriger Längserstreckung.

10. Niederhalter (7) für die Befestigung von Bremsbelägen in einer Scheibenbremse mit einer Längserstreckung und einer demgegenüber wesentlich geringeren Breite (B), und mit einem ersten Endbereich und einem zweiten Endbereich, wobei der Niederhalter (7) in einem der Endbereiche mit einer vollständig oder nahezu vollständig geschlossenen Befestigungsöffnung (11) versehen ist, deren Mittelachse (MB) sich in Richtung der Breite (B) des Niederhalters (7) erstreckt, **dadurch gekennzeichnet, dass** die Oberseite des Niederhalters entlang der Niederhalter-Längsmittellinie (M) als eine langgestreckte Basis (7C) ausgebildet ist, dass sich die Mittelachse (MB) der Befestigungsöffnung (11) unterhalb der Basis (7C) befindet, und dass die Befestigungsöffnung (11)
- entweder durch eine zweigeteilte Ausgestaltung der Befestigungsöffnung (11) bestehend aus einer ersten Befestigungsöffnung in Gestalt einer Öse (10A), einer zu der ersten Befestigungsöffnung fluchtenden, zweiten Befestigungsöffnung in Gestalt einer Öse (10B) und einem zwischen den Ösen (10A, 10B) angeordneten Freiraum (90), wobei die Ösen (10A, 10B) aus einem um mindestens 300° verformten Materialabschnitt des Niederhalters (7) bestehen, gebildet wird,
- oder durch ein Rohr (10) gebildet wird, dessen Rohrachse sich in Richtung der Breite (B) des Niederhalters (7) erstreckt, wobei das Rohr (10) eine Rohrlänge (L) aufweist, die größer ist als die Breite (B) des Niederhalters (7) auf dessen übriger Längserstreckung.

11. Niederhalter nach Anspruch 10, **dadurch gekennzeichnet, dass** die Befestigungsöffnung (11) von rundem Öffnungsquerschnitt ist.

12. Niederhalter nach einem der Ansprüche 10 oder 11, **dadurch gekennzeichnet, dass** der Niederhalter (7) aus einem starren Metallblech und die Ösen (10A, 10B) aus einem um nahezu 360° verformten Materialabschnitt des Metallblechs besteht, wobei der insoweit verbleibende Restspalt (85) metallisch verschlossen ist, vorzugsweise durch einen Schweiß- oder Lötpunkt.

13. Niederhalter nach Anspruch 10 oder 11, **dadurch gekennzeichnet, dass** der Niederhalter (7) auf einem großen Teil seiner Gesamtlänge als eine Rinne aus einer langgestreckten Basis (7C) und an den Seiten der Basis (7C) angeordneten Seitenflanken (8A, 8B) ausgebildet ist, wobei nur die Basis (7C) mit dem Rohr (10) verbunden ist, hingegen die Seitenflanken (8A, 8B) mit Abstand zu dem Rohr (10) enden.

14. Niederhalter nach Anspruch 13, **dadurch gekennzeichnet, dass** das Rohr (10) stoffschlüssig mit der Basis (7C) verbunden ist.

15. Niederhalter nach einem der Ansprüche 10 bis 14, mit Ausnahme von Anspruch 12, **dadurch gekennzeichnet, dass** die Wandstärke des Rohrs (10) geringer ist, als die Materialstärke des im Übrigen aus Metallblech hergestellten Niederhalters.

16. Niederhalter nach einem der Ansprüche 10 bis 15, mit Ausnahme von Anspruch 12, **dadurch gekennzeichnet, dass** das Rohr (10), beschränkt auf einen mittleren Rohrabschnitt, mit mindestens einer seitlichen Öffnung (12) versehen ist.

## Claims

1. Brake pad holder of a vehicle disc brake having brake pads (3) on the inside and outside of the vehicle arranged on both sides of a brake disc in a pad channel (6) of a brake calliper (1), and also having a hold-down device (7) extending transversely over the brake pads (3) which is supported indirectly towards the disc brake axis (A) or indirectly against the brake pads (3), and has an end region on each of its two ends, with which the hold-down device (7) is supported in respect of the brake calliper (1), wherein the hold-down device (7) is provided with a completely, or almost completely, closed fixing opening (11) in one of the end regions, the centre axis (MB) of said fixing opening extending in the brake pad circumferential direction, **characterized in that** the fixing opening (11) is located on the outside of the vehicle, the upper side of the hold-down device is formed along the hold-down device longitudinal centre line (M) as an elongated base (7C) and the central axis (MB) of the fixing opening (11) is located beneath said base (7C).

2. Brake pad holder according to Claim 1, **characterized in that** the fixing opening (11) has a round opening cross section and surrounds a bolt (13) which connects the hold-down device (7) to the brake calliper (1).

3. Brake pad holder according to Claim 1 or 2, **characterized in that** the fixing opening is created by an eye (10A, 10B) which is composed of a material section of the hold-down device (7) formed through at least 300°.

4. Brake pad holder according to Claim 3, **characterized in that** the hold-down device (7) is made of a rigid sheet metal and the eye (10A, 10B) is composed of a material section of the sheet metal formed through almost 360°, wherein the residual gap (85) still remaining to this extent is metallically closed, preferably by a spot weld or soldering point.

5. Brake pad holder according to one of the preceding claims, **characterized by** a two-part configuration of the fixing opening (11) consisting of a first fixing opening in the form of an eye (10A), a second fixing opening in alignment with the first fixing opening in the form of an eye (10B) and a clearance (90) arranged between the eyes (10A, 10B), into which a holder (50) formed on the brake calliper (1) projects.

6. Brake pad holder according to Claim 1 or 2, **characterized in that** the fixing opening (11) is created by a pipe (10), the axis of which pipe extends in the brake disc circumferential direction.

7. Brake pad holder according to Claim 6, **characterized in that** the hold-down device (7) is configured over a large part of its total length as a trough with an elongate base (7C) and side flanks (8A, 8B) arranged on the sides of said base (7C), wherein only the base (7C) is connected to the pipe (10), whereas the side flanks (8A, 8B) end spaced apart from said pipe (10).

8. Brake pad holder according to Claim 7, **characterized in that** the pipe (10) is connected to the base (7C) in a substance-bonded manner.

9. Brake pad holder according to one of Claims 6 - 8, **characterized in that** the pipe (10) has a length (L) that is greater than the width (B) of the hold-down device (7) over the remaining longitudinal extent thereof.

10. Hold-down device (7) for fixing brake pads in a disc brake having a longitudinal extent and a substantially smaller width (B) by comparison, and having a first end region and a second end region, wherein the hold-down device (7) is provided with a completely, or almost completely, closed fixing opening (11) in one of the end regions, the central axis (MB) of which extends in the direction of the width (B) of the hold-down device (7), **characterized in that** the upper side the upper side of the hold-down device is formed along the hold-down device longitudinal centre line (M) as an elongated base (7C), that the central axis (MB) of the fixing opening (11) is located beneath said base (7C) and that the fixing opening (11)
- is created either by a two-part configuration of the fixing opening (11) consisting of a first fixing opening in the form of an eye (10A), a second fixing opening in alignment with the first fixing opening in the form of an eye (10B) and a clearance (90) arranged between the eyes (10A, 10B), wherein the eyes (10A, 10B) are composed of a material section of the hold-down device (7) formed through at least 300°,
- or is created by a pipe (10), the axis of said pipe extending in the direction of the width (B) of the hold-down device (7), wherein the pipe (10) has a pipe length (L) which is greater than the width (B) of the hold-down device (7) over the remaining longitudinal extent thereof.

11. Hold-down device according to Claim 10, **characterized in that** the fixing opening (11) has a round opening cross section.

12. Hold-down device according to one of Claims 10 or 11, **characterized in that** the hold-down device (7) is made of a rigid sheet metal and the eye (10A, 10B) is composed of a material section of the sheet metal formed through almost 360°, wherein the residual gap (85) still remaining to this extent is metallically closed, preferably by a spot weld or soldering point.

13. Hold-down device according to Claim 10 or 11, **characterized in that** the hold-down device (7) is configured over a large part of its total length as a trough with an elongated base (7C) and side flanks (8A, 8B) arranged on the sides of said base (7C), wherein only the base (7C) is connected to the pipe (10), whereas the side flanks (8A, 8B) end spaced apart from said pipe (10).

14. Hold-down device according to Claim 13, **characterized in that** the pipe (10) is connected to the base (7C) in a substance-bonded manner.

15. Hold-down device according to one of Claims 10 to 14, except for Claim 12, **characterized in that** the wall thickness of the pipe (10) is smaller than the material thickness of the remainder of the hold-down device produced from sheet metal.

16. Hold-down device according to one of Claims 10 to 15, except for Claim 12, **characterized in that** the pipe (10) is provided with at least one side opening (12) limited to a centre section of the pipe.

## Revendications

1. Support de garniture de frein d'un frein à disque de véhicule comprenant des garnitures de frein (3) à l'intérieur du véhicule et à l'extérieur du véhicule agencées des deux côtés d'un disque de frein dans un puits de garniture (6) d'un étrier de frein (1), ainsi que comprenant un serre-flanc (7) passant transversalement au-dessus des garnitures de frein (3), qui s'appuie indirectement ou directement contre les garnitures de frein (3) en direction de l'axe de frein à disque (A) et comprend à ses deux extrémités à chaque fois une zone d'extrémité, avec laquelle le serre-flanc (7) s'appuie contre l'étrier de frein (1), le serre-flanc (7) étant muni, dans une des zones d'extrémité, d'une ouverture de fixation (11) entièrement ou presque entièrement fermée, dont l'axe médian (MB) s'étend dans la direction circonférentielle de disque de frein, **caractérisé en ce que** l'ouverture de fixation (11) se trouve du côté extérieur du véhicule, **en ce que** le côté supérieur du serre-flanc est configuré sous la forme d'une base allongée (7C) le long de la ligne médiane longitudinale de serre-flanc (M), et **en ce que** l'axe médian (MB) de l'ouverture de fixation (11) se trouve en-dessous de la base (7C).

2. Support de garniture de frein selon la revendication 1, **caractérisé en ce que** l'ouverture de fixation (11) est de section transversale d'ouverture ronde et entoure un boulon (13), qui relie le serre-flanc (7) à l'étrier de frein (1).

3. Support de garniture de frein selon la revendication 1 ou 2, **caractérisé en ce que** l'ouverture de fixation est formée par un œillet (10A, 10B), qui est constitué d'une section de matériau du serre-flanc (7) déformée d'au moins 300°.

4. Support de garniture de frein selon la revendication 3, **caractérisé en ce que** le serre-flanc (7) est constitué d'une tôle métallique rigide et l'œillet (10A, 10B) est constitué d'une section de matériau de la tôle métallique déformée de presque 360°, la fente résiduelle restante (85) étant fermée métalliquement, de préférence par un point de soudage ou de brasage.

5. Support de garniture de frein selon l'une quelconque des revendications précédentes, **caractérisé par** une configuration divisée en deux de l'ouverture de fixation (11), constituée par une première ouverture de fixation sous la forme d'un œillet (10A), d'une deuxième ouverture de fixation sous la forme d'un œillet (10B), alignée à la première ouverture de fixation, et d'un espace libre (90) agencé entre les œillets (10A, 10B), dans lequel un support (50) formé sur l'étrier de frein (1) fait saillie.

6. Support de garniture de frein selon la revendication 1 ou 2, **caractérisé en ce que** l'ouverture de fixation (11) est formée par un tube (10), dont l'axe de tube s'étend dans la direction circonférentielle de disque de frein.

7. Support de garniture de frein selon la revendication 6, **caractérisé en ce que** le serre-flanc (7) est formé sur une grande partie de sa longueur totale en tant que rigole en une base allongée (7C) et des flancs latéraux (8A, 8B) agencés sur les côtés de la base (7C), uniquement la base (7C) étant reliée au tube (10), tandis que les flancs latéraux (8A, 8B) se terminent à distance du tube (10).

8. Support de garniture de frein selon la revendication 7, **caractérisé en ce que** le tube (10) est relié par accouplement de matière à la base (7C).

9. Support de garniture de frein selon l'une quelconque des revendications 6 à 8, **caractérisé en ce que** le tube (10) présente une longueur de tube (L), qui est supérieure à la largeur (B) du serre-flanc (7) sur le reste de son étendue longitudinale.

10. Serre-flanc (7) pour la fixation de garnitures de frein dans un frein à disque, ayant une étendue longitudinale et une largeur (B) essentiellement plus petite par rapport à celle-ci, et ayant une première zone d'extrémité et une deuxième zone d'extrémité, le serre-flanc (7) étant muni, dans une des zones d'extrémité, d'une ouverture de fixation (11) entièrement ou presque entièrement fermée, dont l'axe médian (MB) s'étend dans la direction de la largeur (B) du serre-flanc (7), **caractérisé en ce que** le côté supérieur du serre-flanc est configuré sous la forme d'une base allongée (7C) le long de la ligne médiane longitudinale de serre-flanc (M), **en ce que** l'axe médian (MB) de l'ouverture de fixation (11) se trouve en-dessous de la base (7C), et **en ce que** l'ouverture de fixation (11)
- soit est formée par une configuration divisée en deux de l'ouverture de fixation (11), constituée par une première ouverture de fixation sous la forme d'un œillet (10A), d'une deuxième ouverture de fixation sous la forme d'un œillet (10B), alignée à la première ouverture de fixation, et d'un espace libre (90) agencé entre les œillets (10A, 10B), les œillets (10A, 10B) étant constitués d'une section de matériau du serre-flanc (7) déformée d'au moins 300°,
- soit est formée par un tube (10), dont l'axe de tube s'étend dans la direction de la largeur (B) du serre-flanc (7), le tube (10) présentant une longueur de tube (L), qui est supérieure à la largeur (B) du serre-flanc (7) sur le reste de son étendue longitudinale.

11. Serre-flanc selon la revendication 10, **caractérisé en ce que** l'ouverture de fixation (11) est de section transversale d'ouverture ronde.

12. Serre-flanc selon l'une quelconque des revendications 10 ou 11, **caractérisé en ce que** le serre-flanc (7) est constitué d'une tôle métallique rigide et les œillets (10A, 10B) sont constitués d'une section de matériau de la tôle métallique déformée de presque 360°, la fente résiduelle restante (85) étant fermée métalliquement, de préférence par un point de soudage ou de brasage.

13. Serre-flanc selon la revendication 10 ou 11, **caractérisé en ce que** le serre-flanc (7) est formé sur une grande partie de sa longueur totale en tant que rigole en une base allongée (7C) et des flancs latéraux (8A, 8B) agencés sur les côtés de la base (7C), uniquement la base (7C) étant reliée au tube (10), tandis que les flancs latéraux (8A, 8B) se terminent à distance du tube (10).

14. Serre-flanc selon la revendication 13, **caractérisé en ce que** le tube (10) est relié par accouplement de matière à la base (7C).

15. Serre-flanc selon l'une quelconque des revendications 10 à 14, à l'exception de la revendication 12, **caractérisé en ce que** l'épaisseur de paroi du tube (10) est plus petite que l'épaisseur de paroi du reste du serre-flanc fabriqué en tôle métallique.

16. Serre-flanc selon l'une quelconque des revendications 10 à 15, à l'exception de la revendication 12, **caractérisé en ce que** le tube (10), limité à une section de tube centrale, est muni d'au moins une ouverture latérale (12).
